# EUROPÄISCHE PATENTANMELDUNG

(11) **EP 2 360 318 A2**
(43) Veröffentlichungstag der Anmeldung: **24.08.2011**
(21) Anmeldenummer: 11000967.7
(22) Anmeldetag: 07.02.2011
(51) Int. Cl.: E02B 17/02

(54) **Verfahren zur Herstellung einer Gründungsstruktur für ein Offshore-Bauwerk**

(30) Priorität: 16.02.2010 DE 102010008152
(71) Anmelder: WeserWind GmbH Offshore Construction Georgsmarienhütte, 27572 Bremerhaven (DE)
(72) Erfinder: Lüddecke, Falk Dr.-Ing., 06888 Mühlanger (DE); Surma, René, 27619 Schiffdorf (DE); Kassen, Dirk, 49124 Georgsmarienhütte (DE)
(74) Vertreter: Möller, Friedrich

(57) **Zusammenfassung**

Gründungsstrukturen (10) für Offshore-Bauwerke dienen dazu, einen Aufbau, wie beispielsweise eine Offshore-Windenergieanlage und ähnliche Anlagen, auf hoher See abseits der Küste zu installieren. Dazu wird die Gründungsstruktur (10) mit dem Meeresboden verbunden und erstreckt sich von dort aus bis über die Wasseroberfläche, wo der Aufbau angeordnet wird. Um den unterschiedlichen Umgebungsbedingungen, wie unterschiedlichen Meeresböden, verschiedenen Wassertiefen und ähnlichem gerecht zu werden, ist es notwendig, entweder speziell entwickelte Einzelanfertigungen oder im allgemeinen überdimensionierte, wenig angepasste Standardmodelle von Gründungsstrukturen (10) zu verwenden. Die Nachteile einer aufwendigen Einzelentwicklung bzw. einer Überdimensionierung zu vermeiden, ist Aufgabe der Erfindung.

Dazu sieht es das erfindungsgemäße Verfahren vor, eine Gründungsstruktur (10) mit mehreren Bestandteilen (12), wie einem Übergangsstück (16) und einem Tragwerk (14) aus mehreren Tragwerksteilen (16) herzustellen, wobei mehrere Tragwerksteile (16) miteinander verbunden werden und wenigstens eines der Tragwerksteile (16) ausgetauscht wird.

## Beschreibung

Die Erfindung betrifft ein Verfahren zur Herstellung einer Gründungsstruktur für ein Offshore-Bauwerk gemäß dem Oberbegriffs des Anspruchs 1.

Gründungsstrukturen dienen allgemein dazu, sogenannte Offshore-Bauwerke auf offener See abseits der Küste zu errichten. Dazu wird die Gründungsstruktur auf dem Meeresboden abgestellt und fest mit diesem verbunden. Mit einem oben aus dem Wasser herausragenden Abschnitt der Gründungsstruktur wird ein sogenannter Aufbau verbunden. Dazu weist die Gründungsstruktur als Bestandteile zumindest ein Übergangsstück und ein Tragwerk auf, wobei das Übergangsstück zur Geometrieanpassung, Krafteinleitung und Verbindung des Aufbaus mit dem Tragwerk als tragender (Haupt-)Bestandteil der Gründungsstruktur dient. Bei dem Aufbau kann es sich beispielsweise um eine Offshore-Windenergieanlage, ein Offshore-Umspannwerk oder auch andere Anlagen bzw. Anlagenteile oder auch Plattformen handeln.

Die Anforderungen an eine Gründungsstruktur für ein Offshore-Bauwerk sind von den Standortbedingungen, wie unterschiedlichen Meeresböden, verschiedenen Wassertiefen und ähnlichem, und den jeweils zu verwendenden Aufbauten abhängig. Im Stand der Technik werden daher entweder speziell entwickelte Einzelstücke bzw. Einzelanfertigungen oder alternativ universell einsetzbare Standardmodelle der Gründungsstrukturen verwendet. Letztere sind aber im Regelfall für den jeweiligen Einsatzzweck aus Sicherheitsgründen deutlich überdimensioniert. Nachteilig sind dabei einerseits der hohe Entwicklungs- und Fertigungsaufwand für die Herstellung optimierter Einzelanfertigungen und andererseits eine an die jeweiligen Umgebungsbedingungen am Einsatzort wenig angepasste und häufig überdimensionierte Ausbildung der Standardmodelle von Gründungsstrukturen, die zumeist aufwendig mit Hilfe von Adapterteilen und Ähnlichem vor Ort an die lokalen Bedingungen angepasst werden müssen.

Die Aufgabe der vorliegenden Erfindung ist daher die Bereitstellung eines Verfahrens zur standortangepassten, vorzugsweise materialsparenden und insbesondere vereinfachten Herstellung einer Gründungsstruktur für ein Offshore-Bauwerk.

Diese Aufgabe wird gelöst durch ein Verfahren zur Herstellung einer Gründungsstruktur für ein Offshore-Bauwerk mit den Merkmalen des Anspruchs 1. Demnach weist das Tragwerk einerseits mehrere Tragwerksteile auf, die miteinander verbunden werden, und andererseits wird wenigstens eines der Tragwerksteile zur Anpassung an unterschiedliche Einsatzbedingungen ausgetauscht. Indem das Tragwerk der Gründungsstruktur aus mehreren Tragwerksteilen zusammengesetzt wird, kann ein Austausch einzelner Teile des Tragwerks auf einfache Weise erfolgen. Je nach Einsatzzweck bzw. Umgebungsbedingungen lassen sich somit Tragwerksteile mit unterschiedlichen Abmessungen, Traglasten bzw. anderen relevanten Eigenschaften zur Herstellung der Gründungsstruktur verwenden.

Bevorzugt wird das Übergangsstück mit dem Tragwerk verbunden. Dabei wird das Übergangsstück insbesondere an einem ersten, vorzugsweise stirnseitigen Endbereich des Tragwerks angeordnet. Der stirnseitige Endbereich des Tragwerks, der aus dem Wasser herausragt, wird auf diese Weise mit dem Übergangsstück versehen, das damit ebenfalls oberhalb der Wasseroberfläche angeordnet wird. Das Übergangsstück wird bevorzugt als Verbindungsstück zwischen Aufbau und Tragwerk angeordnet.

Besonders bevorzugt wird das Übergangsstück mit einem Aufbau verbunden. Als Aufbau eignen sich beispielsweise Offshore-Windenergieanlagen, Offshore-Umspannwerke und Ähnliches. Es kommen aber auch beispielsweise Plattformen in Betracht. Vorzugsweise wird das Übergangsstück zwischen dem Tragwerk und dem Aufbau angeordnet, um so einerseits die Geometrie des Aufbaus auf die des Tragwerks anzupassen, und andererseits den Aufbau mit dem Tragwerk zu verbinden. Somit wird für eine sichere Krafteinleitung vom Aufbau in das Tragwerk sorgt.

Wenigstens ein Gründungs- bzw. Installationsmittel wird insbesondere mit dem Tragwerk verbunden. Dabei wird das Gründungsmittel bevorzugt mit einem zweiten, vorzugsweise stirnseitigen Endbereich des Tragwerks verbunden. Gründungsmittel dienen allgemein und auch in diesem Fall dazu, eine feste Verbindung der Gründungsstruktur mit dem Meeresboden herzustellen. Zum Einsatz kommen beispielsweise Pfahlhülsen, durch die sogenannte Gründungspfähle in den Meeresboden gerammt werden, aber auch Suction Cans oder Groutzapfen, die jeweils bei unterschiedlichen Untergründen bzw. Einsatzbedingungen vorteilhaft eingesetzt werden können. Durch eine endseitige Verbindung mit dem Tragwerk wird eine stabile Verbindung der Gründungsstruktur mit dem Meeresboden ermöglicht.

Weiter bevorzugt wird wenigstens einer der Bestandteile der Gründungsstruktur, insbesondere eines der Tragwerksteile und/oder das Übergangsstück, als vorzugsweise vollständige bzw. komplette bzw. fertige Einheit (oder auch Komponente) hergestellt bzw. zusammengesetzt. Besonders bevorzugt wird zumindest einer der Bestandteile als (gesamte) Einheit ausgetauscht. Insbesondere werden eine oder mehrere vorzugsweise fertiggestellte Einheiten zu einer Gründungsstruktur zusammengesetzt bzw. miteinander verbunden. Damit wird insgesamt erreicht, dass die Tragwerksteile bzw. das Übergangsstück beim Austausch bzw. beim Zusammenbau jeweils als ganze Einheiten gehandhabt werden können und nicht in Einzelteilen.

Vorzugsweise weist sowohl das Übergangsstück wie auch das Tragwerk jeweils eine Längsmittelachse auf. Dabei werden die Längsmittelachsen des Übergangsstücks und des Tragwerks bei der Herstellung der Gründungsstruktur vorzugsweise parallel zueinander angeordnet. Besonders bevorzugt fallen die Längsmittelachsen des Übergangsstücks und des damit verbundenen Tragwerks zusammen bzw. aufeinander liegend, das heißt sie sind vorzugsweise identisch. Dadurch wird eine zentrierte bzw. symmetrische Anordnung der Bestandteile der Gründungsstruktur in Bezug auf die Längsmittelachse ermöglicht.

Insbesondere wird als Tragwerk bzw. als Tragwerksteil zumindest abschnittsweise bzw. als Teilbereich eines Tragwerksteils eine Gitterstruktur, insbesondere eine sogenannte Jacketstruktur verwendet. Eine vorzugsweise dreidimensionale Gitterstruktur, insbesondere mit schräg bzw. diagonal verlaufenden Gitterabschnitten, erweist sich dabei als besonders stabil bei gleichzeitig geringem Materialeinsatz und geringer Angriffsfläche für Wasserbewegungen.

Besonders bevorzugt wird das Tragwerk (wie insbesondere die Gitterstruktur bzw. Jacketstruktur) zumindest größtenteils aus einer Vielzahl Säulen und/oder Streben zusammengesetzt. Die Säulen und/oder Streben werden dabei vorzugsweise stab- oder rohrförmig ausgebildet. Weiter bevorzugt sind die Säulen und/oder Streben an Knotenpunkten miteinander verbunden, wobei zur Verbindung an den Knotenpunkten insbesondere Knotenstücke dienen. Dies bietet den Vorteil, dass das Tragwerk selber auch aus einer Vielzahl von modularen bzw. Standard-Komponenten, nämlich den Säulen, Streben und Knotenstücken zusammengesetzt werden kann, wobei im Regelfall nur geringe Anpassungen an den einzelnen Teilen vorgenommen werden müssen. Diese Knotenstücke sind weiter bevorzugt als Gussknoten ausgebildet. Damit können kostengünstig nahezu beliebig geformte Knotenstücke hergestellt werden.

Die Bestandteile der Gründungsstruktur, insbesondere das Tragwerk und/oder die Tragwerksteile und/oder das Übergangstück, werden vorzugsweise an den jeweils miteinander korrespondierenden Verbindungsstellen miteinander verbunden. Durch miteinander korrespondierende Verbindungsstellen kann ein passgenauer Zusammenbau der Gründungsstruktur erfolgen.

Weiter bevorzugt werden die Tragwerksteile an Verbindungstellen, die an dem jeweiligen Tragwerksteil endseitig angeordnet sind, miteinander verbunden. Dazu korrespondieren insbesondere die Verbindungsstellen, vorzugsweise die dort angeordneten Knotenstücke, der miteinander verbundenen Tragwerksteile miteinander, insbesondere formschlüssig. Dies ermöglicht eine passgenaue und stabile Herstellung der Verbindung zwischen einzelnen Tragwerksteilen. Die Ausbildung speziell zur Verbindung mehrerer Tragwerksteile vorgesehener Verbindungsknoten bzw. Knotenstücke an den Verbindungsstellen wird dabei bevorzugt, da damit eine besonders einfache und stabile Verbindung beim Austauschen einzelner Tragwerksteile ermöglicht wird. Als miteinander korrespondierende Verbindungsstellen können alternativ auch normale Verbindungsknoten bzw. Knotenstücke verwendet werden. Dadurch wird erreicht, dass keine speziell ausgebildeten Bauteile an den Verbindungsstellen vorgesehen werden müssen, sondern stattdessen vorhandene Knotenstücke mit den entsprechenden Verbindungsstellen bzw. Fügeflächen genutzt werden können.

Besonders bevorzugt werden zumindest einige, vorzugsweise alle Verbindungsstellen eines Tragwerkteils in einer gemeinsamen Ebene angeordnet. Diese Ebene verläuft vorzugsweise außerdem im Wesentlichen senkrecht zur Längserstreckung bzw. der Längsmittelachse des Tragwerks und/oder des Tragwerkteils und/oder der Gründungsstruktur. Zum Einen wird dadurch die Herstellung vereinfacht, zum Anderen auch die Austauschbarkeit einzelner Tragwerksteile auf einfache Weise gewährleistet, da gemeinsame Ebenen, in denen die Verbindungsstellen angeordnet sind, leicht an allen zu verbindenden Bestandteilen vorgesehen werden können. Somit existieren sozusagen genormte Verbindungsstellen. Im übrigen lassen sich die Verbindungsstellen der zusammenzusetzenden Tragwerksteile bei einer zur Längsmittelachse symmetrischen Anordnung auch bei einer geeigneten Drehung eines ersten Tragwerksteils gegenüber einem zweiten um die Längsmittelachse aufeinandersetzen und miteinander verbinden, beispielsweise bei einem quadratischem Querschnitt um einen Winkel von 90°.

In einer bevorzugten Ausführung der Erfindung werden die Bestandteile der Gründungsstruktur, insbesondere die Tragstruktur und/oder die Tragwerksteile und/oder das Übergangsstück verschraubt und/oder zum vorzugsweisen dauerhaften Verbinden miteinander verschweißt. Dadurch ist sichergestellt, dass in jedem Fall eine stabile und sichere Verbindung zwischen den einzelnen Bestandteilen hergestellt wird. Eine Schraubverbindung bietet den zusätzlichen Vorteil, dass die Bestandteile auch lösbar miteinander verbunden werden können. Insbesondere werden die Verbindungsstellen als Fügeflächen, vorzugsweise zum Verschweißen, und/oder als Flansch, besonders bevorzugt als Schraubflansch zum Verschrauben ausgebildet. Durch eine spezielle Gestaltung der Verbindungsstellen für die gewählte Verbindungsart wird die Haltbarkeit und Stabilität der Verbindung optimiert. Die Fügeflächen werden bevorzugt als ebene Flächen ausgebildet, sodass sie mit ebenen Stirnflächen der rohrförmigen Säulen bzw. Streben korrespondieren und vorzugsweise formschlüssig aufeinandergesetzt und verschweißt werden können. Die Verwendung ebener Fügeflächen als Verbindungsstellen bei vorzugsweise im Wesentlichen kreisförmigen Querschnitten bietet den Vorteil, dass das Verschweißen beispielsweise auch kostengünstig maschinell erfolgen kann und nicht von Hand erfolgen muss.

Das Übergangsstück wird vorzugsweise mit wenigstens einem Aufbau eines Offshore-Bauwerk, insbesondere einem Turm, einer Anlage bzw. einem Anlagenteil, einer Plattform oder ähnlichem verbunden. Die Verbindung wird vorzugsweise mit Hilfe wenigstens eines Schraubflansches hergestellt, wobei bevorzugt ein erster Schraubflansch dem Übergangsstück und ein zweiter Schraubflansch dem Aufbau zugeordnet wird. Die Schraubflansche werden vorzugsweise miteinander korrespondierend ausgebildet. Vorzugsweise ist der wenigstens eine, insbesondere ringförmig ausgebildete Schraubflansch am Übergangsstück derart zentrisch bzw. mittig angeordnet, dass die Längsmittelachse des Übergangsstücks durch das Zentrum bzw. die Mitte des Schraubflansches verläuft. Das

Übergangsstück dient zur Verbindung der Gründungsstruktur mit dem Aufbau, also sozusagen der Nutzlast der Gründungsstruktur, die bevorzugt oberhalb des Meeresspiegels angeordnet wird. Durch einen Schraubflansch lässt sich auch nach Aufstellung der Gründungsstruktur leicht eine Montage bzw. Demontage des Aufbaus auf hoher See durchführen, da die miteinander korrespondierenden Schraubflansche vorzugsweise lösbar miteinander verbunden werden können.

Insbesondere wird das Übergangsstück mit einem vorzugsweise längsseitigen, ersten Endbereich des Tragwerks verbunden und/oder das wenigstens eine Gründungsmittel mit einem vorzugsweisen längsseitigen, zweiten Endbereich des Tragwerks. Besonders bevorzugt wird das Übergangsstück das wenigstens eine Gründungsmittel mit gegenüberliegenden Endbereichen des Tragwerks verbunden. Damit wird die maximale Längserstreckung des Tragwerks ausgenutzt, um den zweiten Endbereich mit dem Meeresboden zu verbinden und den ersten Endbereich mit dem Übergangsstück und damit mit dem Aufbau der Gründungsstruktur.

Besonders bevorzugt wird die Gründungsstruktur am Aufstellungsort bzw. am Gründungsort mit Hilfe der Gründungsmittel mit dem Meeresboden verbunden. Als Gründungsmittel können beispielsweise Pfahlhülsen für Gründungspfähle und ähnliches dienen. Durch die feste Verbindung der Gründungsmittel mit der Gründungsstruktur wird folglich auch eine feste Verbindung mit dem Meeresboden möglich.

Ein bevorzugtes Ausführungsbeispiel der Erfindung wird im Folgenden anhand der Zeichnung näher erläutert. In dieser zeigen:
- Fig. 1: ein erstes Ausführungsbeispiel einer erfindungsgemäßen Gründungsstruktur,
- Fig. 2: ein zweites Ausführungsbeispiel einer erfindungsgemäßen Gründungsstruktur,
- Fig. 3: ein drittes Ausführungsbeispiel einer erfindungsgemäßen Gründungsstruktur,
- Fig.4: eine teilweise zerlegte Darstellung der Gründungsstruktur gemäß dem Ausführungsbeispiel der Fig. 1,
- Fig. 5: eine teilweise zerlegte Darstellung der Gründungsstruktur gemäß dem Ausführungsbeispiel der Fig. 2,

- Fig.6: eine teilweise zerlegte Darstellung der Gründungsstruktur gemäß dem Ausführungsbeispiel der Fig. 3, und

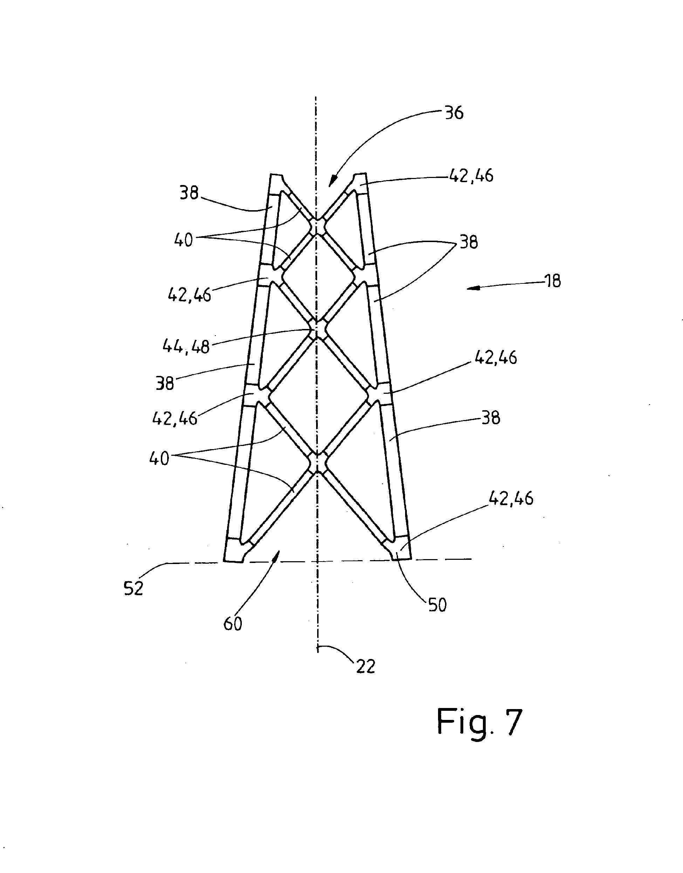

- Fig. 7: eine Detailansicht eines Tragwerkteils in Form einer Gitterstruktur.

Die Figuren zeigen drei verschiedene Ausführungsbeispiele der Erfindung. Es handelt sich dabei jeweils um eine Gründungsstruktur 10, die aus mehreren Bestandteilen 12 zusammengesetzt ist. Bei diesen Bestandteilen 12 handelt es sich einerseits um ein Tragwerk 14 und andererseits um ein Übergangsstück 16. Die Figuren zeigen ausnahmslos Seitenansichten der drei Ausführungsbeispiele der Gründungsstruktur 10 mit quadratischen Querschnitten, so dass die drei weiteren, im Wesentlichen identisch ausgebildeten Seiten nicht dargestellt sind.

Das Tragwerk 14 stellt den von den Abmessungen her insgesamt größten Bestandteil 12 der Gründungsstruktur 10 dar. Das Tragwerk 14 ist dabei aus mehreren Tragwerksteilen 18, 20 zusammengesetzt. Dabei ist das obere Tragwerksteil 18 in allen gezeigten Ausführungsbeispielen praktisch identisch ausgebildet. Es dient als zentrale Komponente eines modularen Systems von Bestandteilen 12 der Gründungsstruktur 10.

Bei der hier dargestellten aufrechten Aufstellung der Gründungsstruktur 10 wie beim Einsatz auf hoher See mit senkrecht verlaufender Längsmittelachse 22 ist das Tragwerksteil 20 als unten angeordnete Basis der Gründungsstruktur 10 mit dem oberen, aus dem Wasser ragenden Tragwerksteil 20 verbunden. Das untere Tragwerksteil 20 ist dabei je nach Einsatzzweck und Umgebungsbedingungen der Gründungsstruktur 10 unterschiedlich ausgebildet. Je nach gewünschter Stabilität werden am unteren Endbereich 18 verschieden breite Tragwerksteile 12 verwendet. Um verschiedenen Untergründen, d. h. bei Aufstellung auf dem Meeresboden verschiedenen Beschaffenheiten des Meeresbodens, gerecht zu werden, ist es möglich, unterschiedliche Installations- bzw. Gründungsmittel 24 zu verwenden. Diese Gründungsmittel 24 sind an dem unteren Tragwerksteil 20 angeordnet und fest mit dem Tragwerksteil 20 verbunden. Als Gründungsmittel 24 kommen beispielsweise sogenannte Groutzapfen 24a in Betracht, die vorzugsweise mit Hilfe von Groutmaterial mit Vorrichtungen wie eingerammten Rohren auf dem Meeresboden verbunden werden. Alternativ können beispielsweise auch sogenannte Suction Cans 24b Verwendung finden, die im Wesentlichen als nach unten offene, fassartige Hohlkörper, beispielsweise zum Einspülen in den Meeresboden, ausgebildet sind. Eine dritte Variante stellen sogenannte Pile Sleeves oder Pfahlhülsen 24c dar, die als vorzugsweise zylindrische bzw. hülsenartige Hohlkörper seitlich an dem Tragwerksteil 20 angeordnet werden und durch die hindurch vorzugsweise sogenannte Gründungspfähle, die in den Figuren nicht gezeigt sind, in den Meeresboden gerammt werden. Die Gründungsmittel 24 sind, um eine sichere Verbindung mit dem Meeresboden herstellen zu können, an dem unteren Endbereich 26 des Tragwerksteils 20 und damit auch des Tragwerks 14 angeordnet.

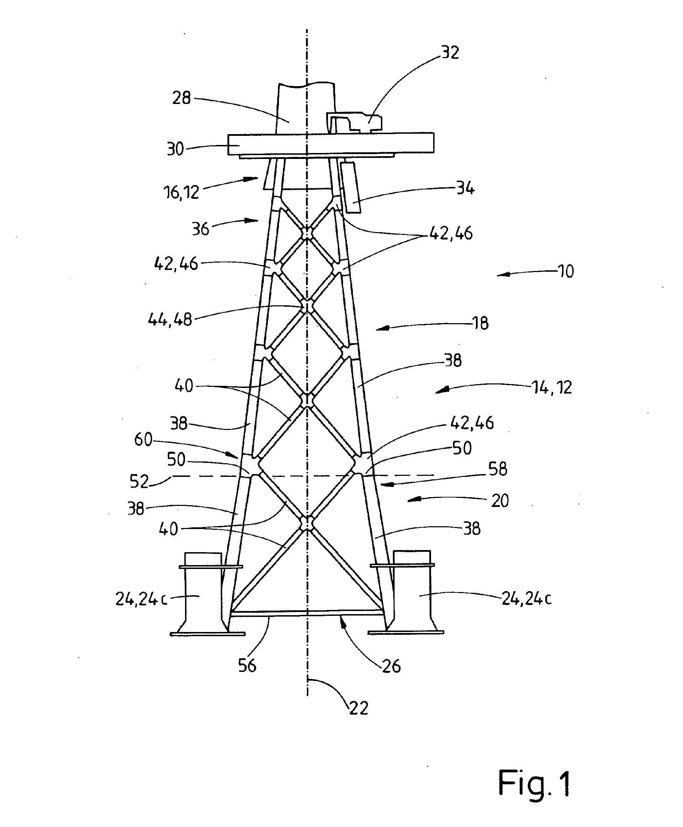

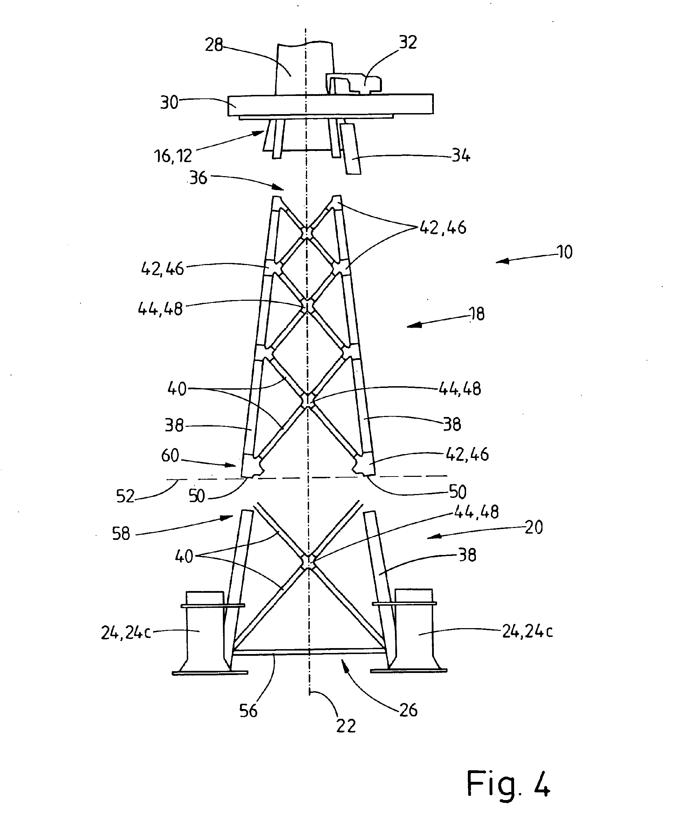

Am entlang der Längsmittelachse 22 gegenüberliegenden, oberen Endbereich 36 des Tragwerks 14 und dort am Tragwerksteil 18 ist das Übergangsstück 16 angeordnet. Das Übergangsstück 16 kann je nach Ausführung und Einsatzzweck selber verschiedene Bestandteile aufweisen. Das Übergangsstück 16 dient allgemein dazu, einen Aufbau mit dem Tragwerk 14 zu verbinden. Dies kann beispielsweise ein in Fig. 1 und 4 angedeuteter Fußabschnitt eines Turms 28 einer Offshore-Windenergieanlage sein. Dabei schafft das Übergangsstück 16 einen Übergang zwischen der Geometrie des Tragwerks 14 und der Geometrie des Aufbaus, wie insbesondere des Turms 28, sodass die auftretenden bzw. einwirkenden Kräfte vom Aufbau über das Übergangsstück 16 in das Tragwerk 14 eingeleitet werden können. Das Übergangsstück 16 weist zur Verbindung mit dem Turm 28 vorzugsweise einen in der Zeichnung nicht dargestellten, senkrecht zur Längsmittelachse 22 angeordneten Schraubflansch auf, mit dessen Hilfe der Turm 28 auch bei der Installation auf hoher See mit dem Übergangsstück 16 verschraubt werden kann. Gegebenenfalls ist durch lösbare Schraubverbindungen auch ein Austausch des Turms 28 möglich.

Als zusätzliche Komponenten des Übergangsstücks 16 kommen beispielsweise ein Deck bzw. eine Plattform 30 in Betracht, die z. B. als Landedeck für einen Hubschrauber dienen kann. Diese Plattform 30 geht dabei seitlich am Rand über die Abmessungen des Übergangsstücks 16 hinaus, überragt dieses also zumindest zum Teil, sodass ausreichend Platz beispielsweise zur Verrichtung von Arbeiten bzw. zum Landen eines Hubschraubers vorgesehen ist. Der Rand der Plattform 30 kann außerdem aus Sicherheitsgründen eine hier nicht dargestellte Umzäunung aufweisen. Auf dem Deck bzw. der Plattform 30 ist in den gezeigten Ausführungsbeispielen zusätzlich ein Kran 32 angeordnet, der zum Transport von Lasten auf die Plattform 30 bzw. von dieser herunter dienen kann. Das Übergangsstück 16 kann außerdem noch eine Zugangshilfe 34, beispielsweise in Form einer seitlich angebrachten Treppe oder Leiter aufweisen, die ein Besteigen des Übergangsstücks 16 durch Personen beispielsweise von einem Boot aus ermöglicht, da das untere Ende der die Zugangshilfe 34 bei auf offener See installierter Gründungsstruktur 10 in etwa auf Höhe der Meeresoberfläche liegt.

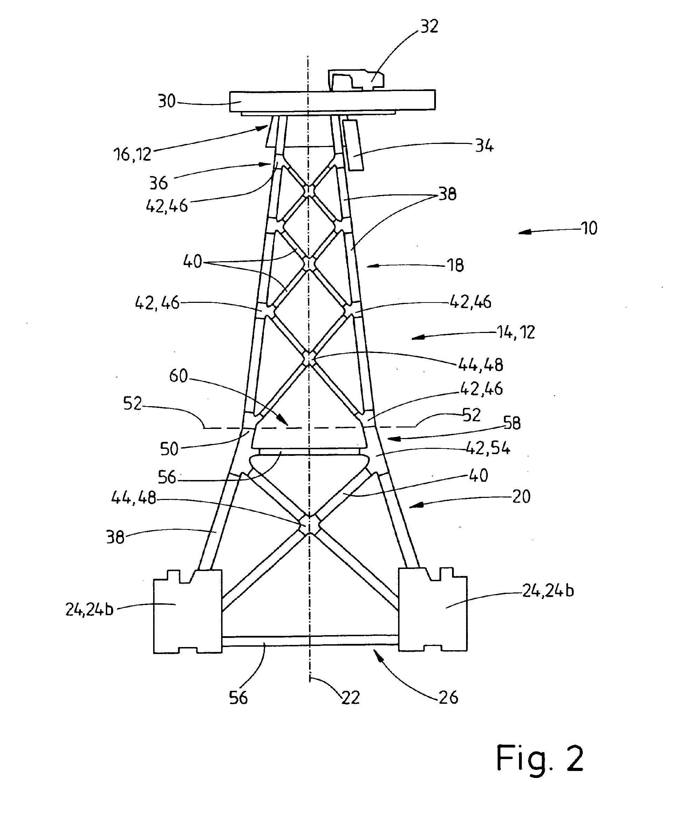

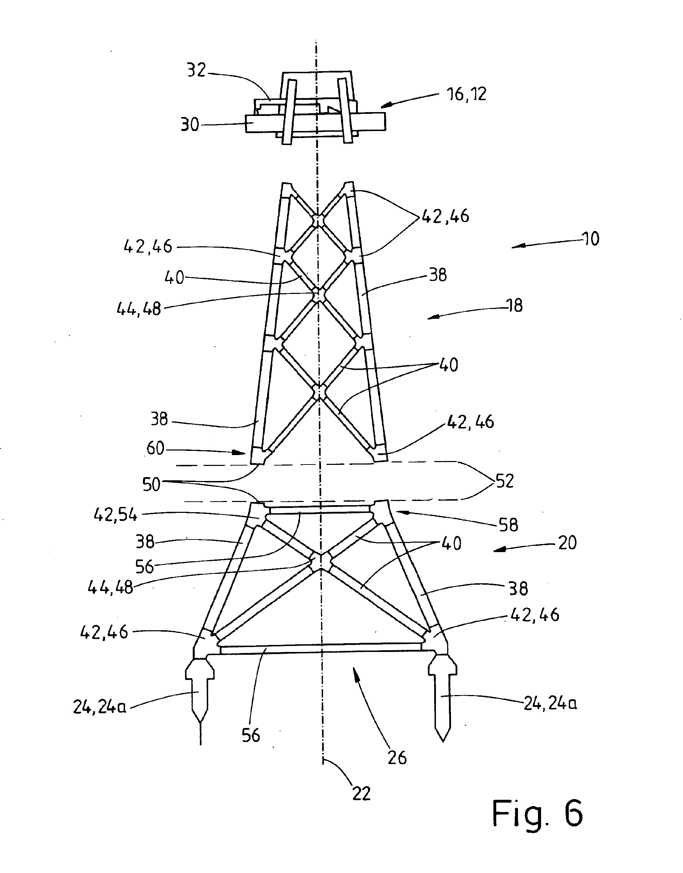

Das Tragwerk 14 ebenso wie die dargestellten Tragwerksteile 18 und 20 sind in den gezeigten Ausführungsbeispielen als dreidimensionale Gitterstruktur bzw. Jacketstruktur ausgebildet. In den hier beschriebenen Ausführungsbeispielen wird eine Gitterstruktur mit einer quadratischen Querschnittsfläche (senkrecht zur Längsmittelachse 22) verwendet. Die Gitterstruktur verjüngt sich dabei vom unteren Endbereich 26 des Tragwerks 14 zum oberen Endbereich 36 des Tragwerks 14, wobei der Querschnitt in der Form aber zumindest im Wesentlichen erhalten bleibt. Im Falle des ersten Ausführungsbeispiels der Fig. 1 und 4 geht das untere Tragwerksteil 20 praktisch nahtlos in das obere Tragwerksteil 18 über, sodass die gesamte Struktur einen sich gleichmäßig nach oben verjüngenden Querschnitt aufweist. In dem zweiten und dritten Ausführungsbeispiel der Fig. 2, 5 bzw. 3, 6 weisen die unteren Tragwerksteile 20 im Vergleich mit dem des ersten Ausführungsbeispiels dagegen eine unterschiedliche, aber jeweils deutlich größere Querabmessung an ihrem unteren Endbereich 26 an den Gründungsmitteln 24 auf. Somit verbreitet sich ihr Querschnitt stärker als bei dem oberen Tragwerksteil 18 und auch als bei dem Tragwerksteil 20 des ersten Ausführungsbeispiels, um so eine stabilere Basis für die Gründungsstruktur 10 bereitzustellen.

Alle gezeigten Tragwerksteile 18 und 20 weisen in den beschriebenen Ausführungsbeispielen Säulen 38 und Streben 40 auf, die an Knotenpunkten 42, 44 durch Knotenstücke 46, 48, 54 miteinander verbunden sind. Die Säulen 38 sind an den Kanten des Tragwerks 14 angeordnet und verlaufen in der gezeigten Darstellung im Wesentlichen aufrecht, d. h. nahezu parallel zur Längsmittelachse 22. Jeweils zwei Säulen 38 des Tragwerksteils 18 sind mit einem Knotenstück 46 auf dessen gegenüberliegenden Seiten kollinear verbunden. Jeweils zwei Streben 40 werden ebenfalls durch ein Knotenstück 48 kollinear verbunden, indem die beiden Streben 40 auf gegenüberliegenden Seiten des Knotenstücks 48 angeordnet werden. Die Säulen 38 sind durch Streben 40, die winklig und nahezu diagonal zu den Säulen 38 verlaufen, verbunden. Jeweils zwei Streben 40 kreuzen sich an Knotenpunkten 44 mit Knotenstücken 48.

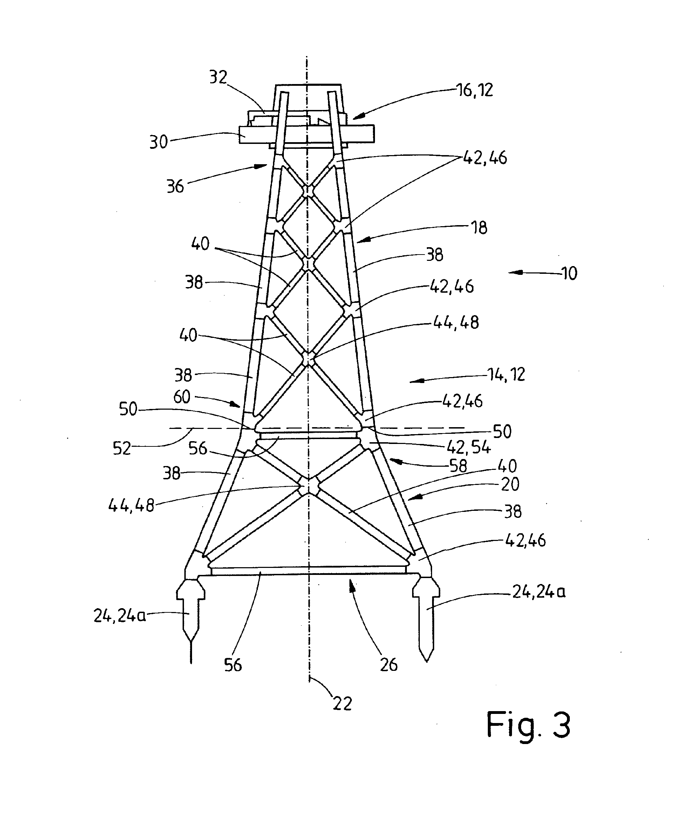

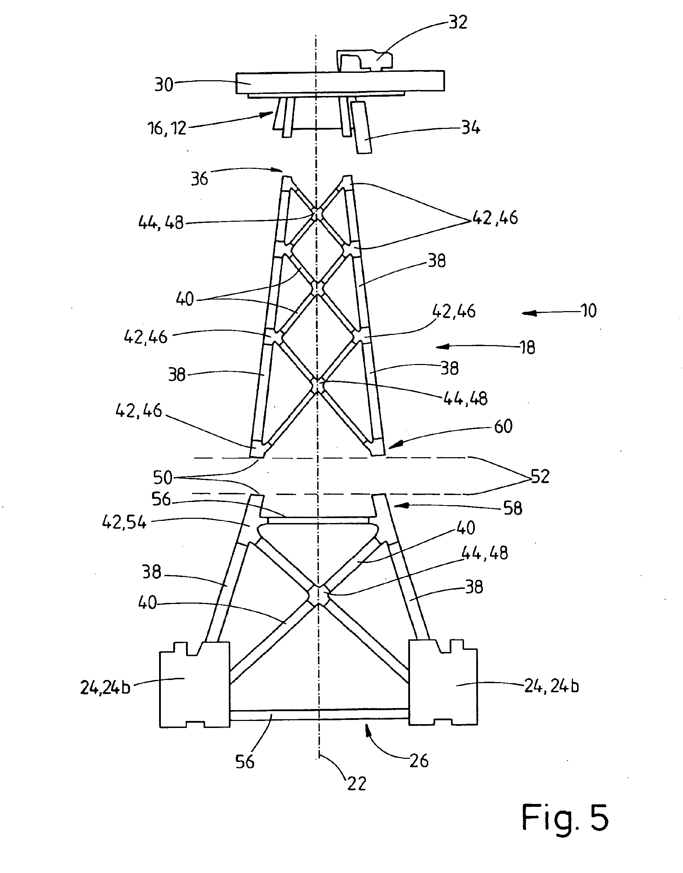

Bei dem Ausführungsbeispiel, das in den Fig. 1 und 3 dargestellt ist, werden die Säulen 38 und die Streben 40 des unteren Tragwerksteils 20 direkt mit einem Knotenstück 46 am unteren Endbereich 60 des oberen Tragwerksteils 18 verbunden. Dazu ist das Knotenstück 46 mit zusätzlichen Fügeflächen zur Verbindung mit den Säulen 38 und Streben 40 am oberen Endbereich 58 eines solchen unteren Tragwerksteils 20 ausgestattet. Die beiden Ausführungsbeispiele der Fig. 2, 5 und 3, 6 zeigen dagegen eine zusätzliche Anordnung von speziellen Knotenstücken 54 an dem Endbereich 58 des unteren Tragwerksteils 20. Diese Knotenstücke 54 als Verbindungsknoten verbinden die Säulen 20, Streben 40 und eine Querstrebe 56 im Ausführungsbeispiel der Fig. 2 und 5.

Zur Verbindung des unteren Tragwerksteils 20 mit dem oberen Tragwerksteil 18 weisen die Knotenstücke 54 zum Verbinden mit den Knotenstücken 46 des oberen Tragwerksteils 18 geeignete Fügeflächen an den Verbindungsstellen 50 auf, die entweder als schweißbare Fügeflächen ausgebildet sein können oder auch alternativ als Schraubflansche oder ähnliches. Um eine möglichst einfache Montage zu gewährleisten, sind die Verbindungsstellen 50 im Wesentlichen in einer gemeinsamen Ebene 52 angeordnet. Die Ebene 52 verläuft im Wesentlichen senkrecht zur Längsmittelachse 22. Gegenüber dieser Ebene 52 können die eigentlichen Fügeflächen leicht winklig verlaufen, um mit der sich verjüngenden Struktur der Tragwerksteile 18 bzw. 20 zu korrespondieren. Vorzugsweise sind die Fügeflächen an den Verbindungsstellen 50 flach bzw. eben ausgebildet, sodass sie auf einfache Weise mit dem jeweiligen Gegenstück zusammengesetzt und verschweißt werden können. Die Knotenstücke 46 des oberen Tragwerksteils 18 können dabei identisch zu denjenigen des ersten Ausführungsbeispiels ausgebildet sein, auch wenn hier die zusätzlichen Abgänge für Querstreben 40 nicht gezeigt sind.

Je nach Position innerhalb der Tragwerksteile 18, 20 des Tragwerks 14 weisen die Knotenstücke 44, 48 eine unterschiedliche Geometrie auf. Dies ist dadurch begründet, dass sie mit unterschiedlich vielen und unter unterschiedlichen Winkeln angeordneten Säulen 38 bzw. Streben 40 verbunden sind. Besonders deutlich wird dies bei Betrachtung der unter einem deutlich flacheren Winkel zu der Längsmittelachse 22 verlaufenden Säulen 38 des Tragwerksteils 20 gegenüber denen des Tragwerksteils 18 beispielsweise in den Fig. 2, 3, 5 und 6.

Die Säulen 38 und Streben 40 sind mit den Knotenstücken 46, 48, 54 an in den Figuren nicht im Detail dargestellten Fügeflächen verschweißt. Die Fügeflächen der gegossenen Knotenstücke 46, 48, 54 sind dazu eben ausgebildet, um mit ebenfalls ebenen stirnseitigen Endflächen der Säulen 38 bzw. der Streben 40 durch stumpfes Aufeinandersetzen auf einfache Weise zusammengesetzt und verschweißt werden zu können. Dazu sind die Säulen 38 und die Streben 40 rohrförmig ausgebildet und mit senkrecht zur Längserstreckung ausgerichteten Stirnflächen versehen.

Das erfindungsgemäße Verfahren funktioniert wie folgt:
Ausgehend von dem Tragwerksteil 18, das den Mittelteil der Gründungsstruktur 10 bildet und bei den gezeigten Ausführungsbeispielen praktisch identisch ist, wird dieselbe aus mehreren Bestandteilen 12 zusammengesetzt.
Aus einer Auswahl verschiedener Gründungsmittel 24, wie beispielsweise Groutzapfen 24a, Suction Cans 24b, Pfahlhülsen 24c und ähnlichem, wird zunächst dasjenige Gründungsmittel 24 ausgewählt, das den Bedingungen am späteren Gründungsort der Gründungsstruktur 10 auf dem Meeresboden am ehesten gerecht wird. Hierbei kann auch eine Kombination verschiedener Gründungsmittel 24 in Betracht kommen. Je nach verwendetem Gründungsmittel 24 wird ein entsprechendes Tragwerksteil 20 als unterer Teil der Gründungsstruktur 10 ausgewählt. Dieses Tragwerksteil 20 ist bereits oder wird dann mit den Gründungsmitteln 24 verbunden und weist für den Einsatzzweck geeignete Querabmessungen und Stabilität auf.
Am oberen Endbereich 58 des Tragwerksteils 20, also den Gründungsmitteln 24 entlang der Längsmittelachse 22 gegenüberliegend, wird das Tragwerksteil 18 aufgesetzt und mit dem Tragwerksteil 20 verbunden. Dieses Verbinden kann beispielsweise durch Schweißen oder auch durch Verschrauben bei vorhandenen Schraubflanschen erfolgen. Schließlich wird am oberen Endbereich 36 des Tragwerksteils 18 noch ein dem Einsatzzweck entsprechendes Übergangsstück 16 angeordnet und ebenfalls mit dem Tragwerksteil 18 ebenfalls verbunden. Die Reihenfolge der Auswahl der Bestandteile 12 und des Zusammenbaus der Gründungsstruktur 10 ist dabei grundsätzlich beliebig.

Somit wird aus einer begrenzten Anzahl modularer, d. h. austauschbarer Komponenten bzw. Bestandteile der Gründungsstruktur eine dem jeweiligen Einsatzzweck gut angepasste Gründungsstruktur 10 zusammengesetzt. Einzelne Komponenten bzw. Bestandteile lassen sich jede für sich zertifizieren bzw. zulassen, so dass bei der Herstellung der Gründungsstruktur eine Auswahl aus verschiedenen Komponenten bzw. Bestandteilen zum Zusammenbauen erfolgen kann. Das Zusammensetzen kann vorzugsweise bereits an Land, aber auch auf hoher See erfolgen, da nur wenige Verbindungen zwischen den Tragwerksteilen 18 und 20 und dem Übergangsstück 16 hergestellt werden müssen. Somit kann die Gründungsstruktur 10 auch in mehreren Bestandteilen 12 gegebenenfalls einzeln zum Gründungsort transportiert werden.

Die vollständig oder zumindest bis auf das Übergangsstück 16 zusammengebaute Gründungsstruktur 10 wird dann am Aufstellungs- bzw. Gründungsort auf dem Meeresboden abgestellt und dort mit Hilfe der Gründungsmittel 24 mit dem Meeresboden verbunden. Allerdings ist auch zumindest ein teilweiser Zusammenbau unter Wasser möglich, sofern entsprechend geeignete Verbindungsarten verwendet werden, beispielsweise durch Verschrauben.

Die gezeigten Ausführungsbeispiele zeigen jeweils die Verwendung zweier verbundener Tragwerksteile 18 und 20. Auch eine Erweiterung mehr als zwei Tragwerksteile ist auf einfache Weise möglich. Dies ist beispielsweise sinnvoll, wenn besonders große Wassertiefen vorliegen und dementsprechend mehrere geeignete ähnliche Tragwerksteile mit zueinander passenden Abmessungen übereinander angeordnet werden müssen.

Als Materialien zur Herstellung der Bestandteile der Gründungsstruktur 10, insbesondere der die Säulen 38, der Streben 40 und der Knotenstücke 46 und 48, werden vorzugsweise schweißbare Materialien verwendet, insbesondere Stahl.

### Bezugszeichenliste:

- 10: Gründungsstruktur
- 12: Bestandteil
- 14: Tragwerk
- 16: Übergangsstück
- 18: Tragwerksteil
- 20: Tragwerksteil
- 22: Längsmittelachse
- 24: Gründungsmittel
- 24a: Groutzapfen
- 24b: Suction Can
- 24c: Pfahlhülse
- 26: Endbereich
- 28: Turm
- 30: Plattform
- 32: Kran
- 34: Zugangshilfe
- 36: Endbereich
- 38: Säulen
- 40: Streben
- 42: Knotenpunkt
- 44: Knotenpunkt
- 46: Knotenstück
- 48: Knotenstück
- 50: Verbindungsstelle
- 52: Ebene
- 54: Knotenstück
- 56: Querstrebe
- 58: Endbereich
- 60: Endbereich

## Patentansprüche

1. Verfahren zur Herstellung einer Gründungsstruktur (10) für ein Offshore-Bauwerk, insbesondere einer Offshore-Windenergleanlage, wobei die Gründungsstruktur (10) mehrere Bestandteile (12), zumindest ein Übergangsstück (16) und ein Tragwerk (14), aufweist, **dadurch gekennzeichnet, dass** das Tragwerk (14) mehrere Tragwerksteile (18, 20) aufweist, wobei die Tragwerksteile (18, 20) miteinander verbunden werden, und dass wenigstens eines der Tragwerksteile (18, 20) zur Anpassung an unterschiedliche Einsatzbedingungen ausgetauscht wird.

2. Verfahren nach Anspruch 1, **dadurch gekennzeichnet, dass** das insbesondere austauschbare Übergangsstück (16) vorzugsweise mit dem Tragwerk (14) verbunden wird, insbesondere mit einem ersten, vorzugsweise stirnseitigen Endbereich (36) des Tragwerks (14), und/oder dass das Übergangsstück (16) mit einem Aufbau verbunden wird, wobei vorzugsweise das Übergangsstück (16) im Bereich zwischen dem Aufbau und dem Tragwerk (14) angeordnet wird, vorzugsweise den Aufbau und das Tragwerk (14) verbindend.

3. Verfahren nach Anspruch 1 oder 2, **dadurch gekennzeichnet, dass** das Übergangsstück (16) mit einem Aufbau verbunden wird, und/oder dass wenigstens ein Gründungsmittel (24) bzw. Installationsmittel mit dem Tragwerk (14) verbunden wird, insbesondere mit einem zweiten, vorzugsweise stirnseitigen Endbereich (26) des Tragwerks (14).

4. Verfahren nach einem der vorhergehenden Ansprüche, **dadurch gekennzeichnet, dass** wenigstens einer der Bestandteile (12) der Gründungsstruktur (10), insbesondere das Übergangsstück (16) und/oder wenigstens eines der Tragwerksteile (18, 20), als vorzugsweise komplette bzw. fertige Einheit hergestellt wird, wobei bevorzugt zumindest einer der Bestandteile (12) als Einheit ausgetauscht wird und/oder wobei vorzugsweise zumindest einer der Bestandteile (12) als Einheit mit den übrigen Bestandteilen (12) zu der Gründungsstruktur (10) zusammengesetzt und/oder verbunden wird.

5. Verfahren nach einem der vorhergehenden Ansprüche, **dadurch gekennzeichnet, dass** das Übergangsstück (16) ebenso wie das Tragwerk (14) jeweils eine Längsmittelachse (22) aufweist, wobei die Längsmittelachsen (22) des Übergangsstücks (16) und des Tragwerks (14) bevorzugt parallel, besonders bevorzugt aufeinander liegend bzw. zusammenfallend angeordnet werden.

6. Verfahren nach einem der vorhergehenden Ansprüche, **dadurch gekennzeichnet, dass** zumindest für Teile bzw. Abschnitte des Tragwerks (14) und/oder der Tragwerksteile (18,20) eine Gitterstruktur, insbesondere eine Jacketstruktur, verwendet wird.

7. Verfahren nach einem der vorhergehenden Ansprüche, **dadurch gekennzeichnet, dass** das Tragwerk (14), insbesondere die Gitterstruktur bzw. Jacketstruktur, zumindest im Wesentlichen aus einer Vielzahl Säulen (38) und/oder Streben (40) zusammengesetzt wird, wobei die insbesondere stab- und/oder rohrförmigen Säulen (38) und/oder Streben (40) vorzugsweise an Knotenpunkten (42, 44), insbesondere durch Knotenstücke (46, 48), miteinander verbunden werden, wobei die Knotenstücke (46, 48) vorzugsweise als Gussknoten ausgebildet werden.

8. Verfahren nach einem der vorhergehenden Ansprüche, **dadurch gekennzeichnet, dass** die Bestandteile der Gründungsstruktur (10), insbesondere das Tragwerk (14) und/oder die Tragwerksteile (18, 20) und/oder das Übergangsstück (16), an den jeweils miteinander korrespondierenden Verbindungsstellen (50) miteinander verbunden werden.

9. Verfahren nach einem der vorhergehenden Ansprüche, **dadurch gekennzeichnet, dass** die Tragwerksteile (18, 20) an bevorzugt endseitigen Verbindungsstellen (50) miteinander verbunden werden, wobei die Verbindungsstellen (50) miteinander verbundener Tragwerksteile (18, 20) vorzugsweise miteinander korrespondieren, insbesondere formschlüssig, und/oder dass bei miteinander korrespondierenden Verbindungsstellen (50) zumindest einseitig ein Knotenstück (54) als Verbindungsknoten angeordnet wird.

10. Verfahren nach einem der vorhergehenden Ansprüche, **dadurch gekennzeichnet, dass** mehrere, vorzugweise alle Verbindungsstellen (50) eines Tragwerkteils (18, 20) zumindest im Wesentlichen in einer Ebene (52) angeordnet werden, wobei die Ebene (52) vorzugsweise zu der Längsmittelachse (22) des Tragwerkteils (18, 20) und/oder der Gründungsstruktur (10) zumindest nahezu senkrecht angeordnet wird.

11. Verfahren nach einem der vorhergehenden Ansprüche, **dadurch gekennzeichnet, dass** die Bestandteile (12) der Gründungsstruktur (10), insbesondere das Tragwerk (14) und/oder die Tragwerksteile (18, 20) und/oder das Übergangsstück (16), miteinander verschweißt und/oder verschraubt werden und/oder dass die Verbindungsstellen (50) als Fügestellen, vorzugsweise zum Verschweißen, und/oder als Flansch, besonders bevorzugt als Schraubflansch, ausgebildet werden.

12. Verfahren nach einem der vorhergehenden Ansprüche, **dadurch gekennzeichnet, dass** das Übergangsstück (16) mit wenigstens einem Aufbau, insbesondere einem insbesondere zylindrischen Turm (28), einer Anlage, einer Plattform, oder ähnlichem verbunden wird, vorzugsweise mit Hilfe wenigstens eines vorzugsweise ringförmigen und bevorzugt zentrisch angeordneten Schraubflansches, wobei insbesondere ein erster an dem Übergangsstück (16) und ein zweiter dem Aufbau zugeordneter Schraubflansch, als miteinander korrespondierende Schraubflansche verwendet werden.

13. **dadurch gekennzeichnet, dass** das Übergangsstück (16) mit einem vorzugsweise längsseitigen, ersten Endbereich (36) des Tragwerks (14) verbunden wird, und/oder dass das wenigstens eine Gründungsmittel (24) mit einem vorzugsweise längsseitigen, zweiten Endbereich (26) des Tragwerks (14) verbunden wird, wobei das Übergangsstück (16) und das wenigstens eine Gründungsmittel (24) bevorzugt mit gegenüberliegenden Endbereichen (26, 36) des Tragwerks (14) verbunden werden.

14. **dadurch gekennzeichnet, dass** die Gründungsstruktur (10) am Aufstellungs- bzw. Gründungsort auf dem Meeresboden abgestellt wird, und/oder vorzugsweise mit Hilfe wenigstens eines der Gründungsmittel (24) mit dem Meeresboden fest verbunden wird.
